# EUROPÄISCHE PATENTSCHRIFT

(11) **EP 1 840 690 B1**
(45) Veröffentlichungstag und Bekanntmachung des Hinweises auf die Patenterteilung: **05.03.2014**
(21) Anmeldenummer: 07100495.6
(22) Anmeldetag: 12.01.2007
(51) Int. Cl.: G05D 1/02

(54) **Verfahren zur Erstellung eines Routenplans für landwirtschaftliche Maschinensysteme**
Method for creating a rounting plan for agricultural machinery
Procédé destiné à la fabrication d'un plan de route pour systèmes de machines agricoles

(30) Priorität: 30.03.2006 DE 102006015204
(43) Veröffentlichungstag der Anmeldung: 03.10.2007
(73) Patentinhaber: CLAAS Selbstfahrende Erntemaschinen GmbH, 33428 Harsewinkel (DE)
(72) Erfinder: Diekhans, Dr. Norbert, 33335 Gütersloh (DE); Huster, Jochen, 33330 Gütersloh (DE); Brunnert, Andreas, 33397 Rietberg (DE); Meyer zu Helligen, Lars Peter, 32139 Spenge (DE)

(56) Entgegenhaltungen:
- WO-A1-00/08535
- WO-A1-00/58800
- DE-A1- 19 629 618
- US-A- 5 646 844

## Beschreibung

Die Erfindung betrifft ein Verfahren zur Erstellung eines Routenplans für eine Gruppe von landwirtschaftlichen Maschinensystemen für die Bearbeitung eines zu bearbeitenden Territoriums. Darüber hinaus betrifft die Erfindung ein Routenplanungssystem zur Erstellung eines entsprechenden Routenplans sowie ein Verfahren zur Steuerung einer Gruppe von landwirtschaftlichen Maschinensystemen bei der Bearbeitung eines zu bearbeitenden Territoriums, bei dem ein dementsprechend erstellter gemeinsamer Routenplan genutzt wird.

Nachdem die Leistungsfähigkeit landwirtschaftlicher Maschinensysteme, d. h. von Arbeitsfahrzeugen wie z. B. Mähdreschern oder Feldhäckslern, Schleppern mit diversen Anbauten wie Düngerstreuern, Sämaschinen, Spritzgeräten, Wendern, Schwadern etc., immer weiter gesteigert wurde, gewinnt nun in den letzten Jahren die Planung des Arbeitsablaufs immer mehr an Bedeutung. Insbesondere bei der Ernte steht für die einzelnen Arbeitseinsätze wetterbedingt oft nur ein begrenzter Arbeitszeitraum zur Verfügung, der meist wegen einer mangelnden Einsatzplanung nicht optimal ausgenutzt wird. Darüber hinaus ist eine präzise Einsatzplanung wichtig, um die theoretisch mögliche maximale Leistungsfähigkeit der Maschinen auch im praktischen Einsatz zu erreichen. Um dieses Ziel einer optimalen Durchführung des Arbeitseinsatzes zu erreichen, wurden sog. Routenplanungssysteme und Routenplanungsverfahren entwickelt, mit denen für das jeweilige Maschinensystem eine optimale Route bei der Bearbeitung des betreffenden Territoriums, z. B. eines bestimmten Schlages, ermittelt wird. Das betreffende Maschinensystem kann dann je nach Ausgestaltung des Maschinensystems vollautomatisch, halbautomatisch oder einfach manuell entlang dieser Route verfahren werden. Üblicherweise arbeiten solche Routenplanungssysteme und Lenkautomaten mit satellitengestützten Navigationseinrichtungen, beispielsweise mit Hilfe von GPS-Empfängern (GPS = Global Positioning System). Zur Verbesserung der Genauigkeit gibt es verschiedene Korrekturverfahren, wie beispielsweise für ein GPS-Verfahren das sog. DGPS (Differentielles GPS).

Ein Routenplanungssystem wird beispielsweise in der EP 0 821 296 A2 beschrieben. Hierbei werden durch Abfahren oder Ablaufen der Feldumrandung mit einem GPS-Gerät die Koordinaten für die Feldumrandung aufgezeichnet und es werden weitere arbeitsfahrzeugspezifische Daten, insbesondere die Arbeitsbreite, eingegeben. Mit einer elektronischen Datenverarbeitungseinrichtung wird dann anhand eines bestimmten Berechnungsalgorithmus der Verlauf des Bearbeitungsfahrweges in Form einer digitalisierten Bearbeitungsroute generiert, wobei ein bestimmtes Optimierungskriterium für die Bearbeitungsroute beachtet wird. Typische Optimierungskriterien könnten beispielsweise darin bestehen, dass notwendige Hilfsfahrten wie beispielsweise Fahrtstrecken zum Wenden an den Feldenden, Fahrten zum Abtanken eines Mähdreschers etc. möglichst gering gehalten werden. Ein anderes Optimierungskriterium kann darin bestehen, dass die Zeit zur Bearbeitung eines bestimmten Feldes insgesamt möglichst gering zu halten ist, wobei ggf. etwas längere Wendestrecken, die aber schneller abfahrbar sind, weil sie keinen Fahrtrichtungswechsel erfordern, in Kauf genommen werden. Ebenso kann aber auch eine Optimierung hinsichtlich mehrerer verschiedener Optimierungskriterien erfolgen, um so einen optimalen Kompromiss zwischen verschiedensten Optimierungsbedingungen zu erreichen.

Die WO 00/58800 A1 beschreibt ein Verfahren zur automatisierten Führung von mehreren landwirtschaftlichen Maschinen auf einem zu bearbeitenden Feld, bei welchem eine erste Maschine einen Referenzpfad aufzeichnet, auf dessen Basis in Abhängigkeit von der Arbeitsbreite der landwirtschaftlichen Maschine ein Routenplan für diese Maschine erstellt wird. Der aufgezeichnete Referenzpfad wird an andere landwirtschaftliche Maschinen, die das gleiche Feld bearbeiten sollen, weitergeleitet, auf dessen Basis die jeweiligen Maschinen in Abhängigkeit von ihrer Arbeitsbreite einen eigenen Routenplan erstellen.

Die US 5, 646,844 beschreibt ein Verfahren zum Regeln des Betriebes von mehreren die Geographie eines Baugeländes verändernden Maschinen, die untereinander in einem kontinuierlichen Datenaustausch hinsichtlich ihrer Positionsdaten auf dem Baugelände stehen, um das Zusammenarbeiten der Maschinen zu koordinieren.

In den meisten Fällen werden landwirtschaftliche Nutzflächen von mehreren Maschinensystemen bearbeitet. Das heißt, die Feldbearbeitung erfolgt durch eine ganze Gruppe von landwirtschaftlichen Maschinensystemen, welche innerhalb einer Prozesskette nacheinander aktiv sein können, wie dies beispielsweise bei einer Sämaschine und nachfolgenden Systemen zum Ausbringen von Spritz- und Düngemitteln der Fall ist, oder die parallel arbeiten können, wie beispielsweise mehrere Erntemaschinen, die in einem Arbeitsverband ein größeres Areal abernten. Grundsätzlich können diese verschiedenen Maschinensysteme - sofern sie über entsprechende Routenplanungsund Automationssysteme verfügen - jeweils für sich eine ideale Route berechnen, die dann abgearbeitet wird.

Dies erfordert aber zunächst, dass jedes Maschinensystem wenigstens die Außenkontur des zu bearbeitenden Territoriums, beispielsweise durch einmaliges Umfahren, bestimmt. Ein solches Vorgehen ist relativ zeitaufwändig. Zwar besteht bereits die Möglichkeit, wie dies in der EP 0 821 296 B1 und der DE 10 2004 0720 242 1 beschrieben wird, dass von einem Routenplanungssystem bereits komplett erstellte Fahrtrouten für andere Einsatzzwecke wieder genutzt werden. Dies ist jedoch nur dann möglich, wenn es sich um das gleiche Maschinensystem oder zumindest um ein Maschinensystem mit gleichen oder sehr ähnlichen Arbeitsparametern wie Arbeitsbreite, Wendekreis etc. handelt.

Darüber hinaus treten Probleme auf, wenn mehrere Maschinen gleichzeitig auf einem, in der Regel größeren, Territorium arbeiten. Hier ist beim Abfahren der Routen durch die jeweiligen Fahrer besonders darauf zu achten, dass es nicht zu Kollisionen mit anderen Maschinensystemen kommt, weil sich beispielsweise Routen überschneiden. Ggf. kommt es auch zu unnötigen Wartezeiten, um eine Kollisionsgefahr zu vermeiden, oder zu Wartezeiten an Ressourcen, die von den Maschinensystemen gemeinsam genutzt werden, beispielsweise beim Einsatz mehrerer Mähdrescher, die ein gemeinsames Abtankfahrzeug nutzen müssen. Zudem ist bei grösseren Territorien sowohl die Beschaffung der notwendigen Referenzlinien bzw. weiterer geographischer Routenplanungsdaten als auch die Erstellung eines kompletten Routenplans sehr zeitaufwendig.

Es ist daher eine Aufgabe der vorliegenden Erfindung, ein verbessertes Verfahren zur Erstellung eines Routenplans für eine Gruppe von landwirtschaftlichen Maschinensystemen und ein entsprechendes Routenplanungssystem anzugeben, mit dem die o. g. Probleme vermieden werden.

Diese Aufgabe wird zum einen durch ein Verfahren gemäß Patentanspruch 1 und zum anderen durch ein Routenplanungssystem gemäß Patentanspruch 11 gelöst.

Bei dem erfindungsgemäßen Verfahren weisen die einzelnen landwirtschaftlichen Maschinensysteme jeweils eigene Routenplanungsdaten-Ermittlungseinrichtungen auf und stehen im Datenaustausch untereinander. Es wird dann auf Basis von ausgetauschten Routenplanungsdaten ein gemeinsamer Routenplan erstellt, wobei der gemeinsame Routenplan dynamisch geändert wird, wenn ein neues Maschinensystem zur Gruppe hinzukommt und innerhalb der Gruppe anmeldet wird oder ein Maschinensystem die Gruppe verlässt und von der Gruppe abmeldet wird. Bei den ausgetauschten Routenplanungsdaten kann es sich um übliche Referenzdaten, beispielsweise Referenzlinien wie die Schlagbegrenzungen, Wegmarkierungen, Hindernisse etc. handeln. Es kann sich hierbei aber auch um bereits abgefahrene oder geplante, eigene (optimierte) Teilrouten, Einsatzdaten wie Art des Einsatzes und Feldfruchtdaten, d. h. Feldfruchteigenschaften und deren Auswirkungen für das jeweilige Maschinensystem, sowie um Maschinenparameter wie Arbeitsbreite, Wenderadius etc. handeln.

Auf die erfindungsgemäße Weise kann sehr schnell und ökonomisch durch die Zusammenarbeit der Maschinensysteme ein Routenplan für das gesamte Territorium erstellt werden. Der gemeinsame Routenplan steht dann allen beteiligten Maschinensystemen und vorzugsweise auch anderen Maschinensystemen zur weiteren Verwendung zur Verfügung.

Zum Aufbau eines erfindungsgemäßen Routenplanungssystems zur Durchführung des erfindungsgemäßen Verfahrens müssen die verschiedenen landwirtschaftlichen Maschinensysteme folgende Komponenten aufweisen:
- Positionsermittlungseinrichtungen, um eine aktuelle Position der betreffenden Maschinensysteme zu ermitteln;
- Routenplanungsdaten-Ermittlungseinrichtungen, um die notwendigen Routenplanungsdaten zur Verfügung zu stellen, beispielsweise durch automatische Erfassung der Positionsdaten sowie weiterer Zusatzinformationen und/oder durch Eingabe durch einen Bediener;
- Kommunikationseinrichtungen, um die Routenplanungsdaten zu versenden.

Außerdem wird zumindest eine Routenplanungseinrichtung benötigt, welche zum Empfang von Routenplanungsdaten mit einer Empfangseinheit gekoppelt ist, um auf Basis von empfangenen Routenplanungsdaten einen gemeinsamen Routenplan für das betreffende Territorium zu erstellen.

Vorzugsweise weisen die einzelnen landwirtschaftlichen Maschinensysteme dabei jeweils eigene Routenplanungseinrichtungen auf und können die Routenplanungsdaten der anderen Maschinensysteme empfangen und verarbeiten. Der gemeinsame Routenplan kann dann koordiniert durch die Routenplanungseinrichtungen der Maschinensysteme auf Basis der ausgetauschten Routenplanungsdaten erstellt werden. Hierzu benötigen die landwirtschaftlichen Maschinensysteme jeweils eine mit der Routenplanungseinrichtung gekoppelte Koordinierungseinrichtung, welche so auf die Routenplanungseinrichtung einwirkt, dass koordiniert mit den Routenplanungseinrichtungen anderer Maschinensysteme innerhalb der Gruppe von Maschinensystemen auf Basis von ausgetauschten Routenplanungsdaten ein gemeinsamer Routenplan erstellt wird.

Grundsätzlich können die einzelnen Maschinensysteme aber auch alle ihre Routenplanungsdaten zunächst an eine zentrale Routenplanungseinrichtungen senden, die dann den gemeinsamen Routenplan erstellt. Bei der zentralen Routenplanungseinrichtung kann es sich bevorzugt auch um eine Routenplanungseinrichtung an einem der Maschinensysteme handeln, welche dann als eine Art "Master-Maschine" die Routenplanungsaufgabe übernimmt.

Das erfindungsgemäße Verfahren zur Erstellung eines gemeinsamen Routenplans wird vorzugsweise innerhalb eines Verfahrens zur Steuerung einer Gruppe von landwirtschaftlichen Maschinensystemen bei der Bearbeitung eines zu bearbeitenden Territoriums eingesetzt. Der gemeinsame Routenplan enthält dabei den einzelnen Maschinensystemen zugeordnete, optimierte Routen zur Bearbeitung des Territoriums. Das Verfahren der Maschinensysteme entlang der jeweiligen Route kann dann in bekannter Weise vollautomatisch, halbautomatisch oder manuell erfolgen, wie später noch näher erläutert wird.

Um ein solches Steuerungsverfahren durchführen zu können, sollten die Routenplanungseinrichtungen und die damit gekoppelten Koordinierungseinrichtungen der landwirtschaftlichen Maschinensysteme vorzugsweise so ausgebildet sein, dass der gemeinsame Routenplan den einzelnen Maschinensystemen zugeordnete optimierte Routen zur Bearbeitung des Territoriums enthält. Außerdem sollten die einzelnen Maschinensysteme dann bevorzugt neben den bereits oben genannten Komponenten jeweils eine Fahrsteuerungseinheit (Lenkautomat) und/oder eine Anzeigeeinheit zum Verfahren des Maschinensystems entlang einer Route aufweisen, je nachdem, ob die Steuerung vollautomatisch oder halbautomatisch bzw. manuell erfolgt.

Durch die Vernetzung der verschiedenen Routenplanungssysteme und den ständigen Datenaustausch ist es möglich, dass jeweils individuell für die einzelnen Maschinensysteme optimale Routen ermittelt werden, wobei bei der Optimierungsstrategie die Routen der jeweils anderen Fahrzeuge berücksichtigt werden. Das heißt, die Optimierung stellt nun nicht mehr isoliert auf ein einzelnes Fahrzeug ab, sondern es wird das gesamte Umfeld, insbesondere in vorherigen oder nachfolgenden Prozessschritten oder parallel dasselbe Territorium bearbeitende Maschinensysteme angemessen berücksichtigt. Es kann so der Gesamtarbeitsprozess optimiert werden. Kollisionsgefahren mit parallel arbeitenden Fahrzeugen oder unnötige Wartezeiten an gemeinsam genutzten Ressourcen und anderen Fahrzeugen können effektiv vermieden werden.

Für die Kommunikation unter den Maschinensystemen können dabei beliebige bidirektionale Kommunikationssysteme und hierfür bekannte Sende/Empfangseinrichtungen, insbesondere funkgestützte Systeme, wie sie auch für Sprechfunk benutzt werden, zum Einsatz kommen. Beispielsweise ist aber auch die Nutzung von Mobilfunknetzen oder ähnlichem möglich.

Die abhängigen Ansprüche und die weitere Beschreibung enthalten besonders vorteilhafte Ausgestaltungen und Weiterbildungen der Erfindung, wobei die erfindungsgemäße Steuerungseinrichtung, das erfindungsgemäße landwirtschaftliche Maschinensystem und das erfindungsgemäße Steuersystem auch analog zu den abhängigen Verfahrensansprüchen weitergebildet sein können.

Wie bereits oben erläutert, umfassen die Routenplanungsdaten bevorzugt geographische Referenzdaten, wie beispielsweise verschiedene Referenzlinien, die die Schlagumrandungen angeben oder Positionen von Hindernissen etc.. Diese werden vorzugsweise mit Hilfe der Maschinensysteme selbst ermittelt.

Für das Aufzeichnen einer Referenzlinie gibt es verschiedene Möglichkeiten. Beispielsweise kann der Fahrer bei einer Variante beim Abfahren einer Referenzstrecke mittels einer Bedienerschnittstelle zunächst einen Startpunkt setzen und ebenso wieder einen Endpunkt setzen, wenn er das Ende der Referenzstrecke erreicht hat. Dabei ist es möglich, dass als Referenzstrecke einfach eine gerade Linie zwischen Start- und Endpunkt gezogen wird. Dies bietet sich beispielsweise an, wenn es sich um eine entsprechend gerade Schlagkante handelt oder um eine Linie im Schlag, entlang derer der Schlag in Teilgebiete unterteilt werden soll. Ebenso ist aber auch ein "Konturmodus" realisierbar, bei dem zwischen dem Startpunkt und dem Endpunkt der Referenzstrecke regelmäßig die Positionskoordinaten des Fahrzeugs erfasst und aufgezeichnet werden und somit die genaue Kontur der abgefahrenen Referenzstrecke erfasst wird und als Referenzlinie verwendet werden kann. Eine weitere Alternative besteht darin, dass nur ein Startpunkt vorgegeben wird und dann eine bestimmte Streckenlänge abgefahren wird.

Bei einer Referenzlinie kann es sich, wie zuvor beschrieben, um eine einzelne Strecke handeln, beispielsweise nur einen Schlagrand. Eine Referenzlinie kann aber auch aus mehreren Teilstrecken zusammengesetzt sein, wobei die einzelnen Teilstrecken natürlich auch wieder als separate Referenzlinien angesehen werden können.

Es ist grundsätzlich möglich, dass das erste Maschinensystem und das zweite Maschinensystem das Territorium zeitlich nacheinander bearbeiten, d. h. dass es sich um Maschinensysteme einer Verfahrenskette handelt, wie z. B. eine Sämaschine und eine Feldspritze oder eine Schneidemaschine und nachfolgende Wender und Schwader. Vorzugsweise wird das Verfahren jedoch auch dann genutzt, wenn das erste Maschinensystem und das zweite Maschinensystem ein Territorium zumindest zeitweise parallel bearbeiten, wie z. B. für die Maschinen eines Maschinenverbands, welche parallel ein größeres Gebiet abarbeiten. Dabei können die einzelnen Maschinensysteme auch gleichartige Maschinensysteme, beispielsweise mehrere Mähdrescher oder mehrere Feldhäcksler - auch desselben Typs - sein.

Insbesondere, wenn mehrere Maschinen gleichzeitig oder nur teilweise zeitlich versetzt ein Territorium gemeinsam bearbeiten, sollte die Übergabe aller Informationen, vor allem der Referenzlinien, dynamisch während des gesamten Arbeitseinsatzes erfolgen, d. h. sobald eines der Maschinensysteme neue Referenzdaten ermittelt, werden diese sofort an die anderen Maschinensysteme übersendet. Dabei kann eine Übersendung durch das Maschinensystem automatisch erfolgen und/oder durch den Bediener des jeweiligen Maschinensystems veranlasst werden. Ebenso ist es aber auch möglich, eine Übersendung bzw. einen Empfang neuer Referenzdaten zu unterbinden bzw. zu verzögern.

Mit dem erfindungsgemäßen Verfahren ist es vorteilhafterweise auch möglich, dass die Maschinensysteme insbesondere beim Start eines parallelen Einsatzes jeweils einen Teil der benötigten Referenzstrecken abfahren und sich diese gegenseitig übersenden, um so alle erforderlichen Referenzdaten möglichst schnell zu gewinnen. Beispielsweise könnte ein Maschinensystem den rechten und den oberen Schlagrand abfahren, während gleichzeitig ein anderes Maschinensystem den linken und den unteren Schlagrand abfährt.

Das durch die Referenzdaten spezifizierte, zu bearbeitende Territorium kann dann beispielsweise auf Basis der Routenplanungsdaten auch in Teilgebiete unterteilt werden. Dies bietet sich insbesondere bei einer gleichzeitigen Abarbeitung durch mehrere Maschinensysteme in einem Maschinenverband an oder wenn es sich um ein Schlagstück mit sehr unregelmäßiger Form handelt.

Es kann dann beispielsweise von den verschiedenen Maschinensystemen jeweils auch ein separater Teilroutenplan für ein bestimmtes Teilgebiet des zu bearbeitenden Territoriums ermittelt werden. Dies hat den Vorteil, dass jede der Routenplanungseinrichtungen in "ihrem" Teilgebiet relativ frei die optimale Route für das betreffende Maschinensystem optimieren kann, ohne andere Maschinensysteme zu berücksichtigen. Eine genauere Koordinierung der Streckenplanung ist dann im Wesentlichen nur noch in den Fahrspuren, an denen die Teilgebiete aneinander angrenzen, sowie in gemeinsam genutzten Vorgewendebereichen bzw. auf Strecken von und zu gemeinsam genutzten Ressourcen erforderlich.

Besonders bevorzugt werden wiederholt, d. h. kontinuierlich oder in zeitlichen Abständen, aktuelle geographische Positionsdaten der einzelnen Maschinensysteme ermittelt, die an die jeweils anderen Maschinensysteme übersandt werden. Dies ist insbesondere dann vorteilhaft, wenn mehrere Maschinen parallel auf einem Schlag arbeiten. Alle Maschinensysteme wissen dann jeweils, wo sie sich befinden und wo sich die jeweils anderen Maschinensysteme befinden. Es können so beispielsweise durch Vorgaben von Sicherheitsabständen und Notabschaltungen, wenn der Sicherheitsabstand überschritten wird, Kollisionen sicher vermieden werden.

Bei dem Verfahren wird dynamisch der Routenplan geändert, wenn ein neues Maschinensystem zur Gruppe hinzukommt oder wenn ein Maschinensystem die Gruppe verlässt. Dies bietet die Möglichkeit, dass jederzeit neue Maschinensysteme in die Gruppe aufgenommen werden können bzw. Maschinensysteme die Arbeitsgruppe verlassen können, weil z. B. ein Defekt vorliegt oder sie an anderer Stelle gebraucht werden. Wenn ein neues Maschinensystem hinzukommt, muss dieses lediglich mit den anderen Maschinensystemen in Kommunikationsverbindung treten und sich innerhalb der Gruppe "anmelden", indem es seine bereits vorhandenen Routenplanungsdaten übersendet, wobei es sich im einfachsten Fall um die eigenen Positionsdaten, die eigenen Maschinenparameter sowie Informationen darüber handelt, dass dieses Maschinensystem sich an dem betreffenden Arbeitseinsatz beteiligen soll. Es erhält dann von den anderen Maschinensystemen deren Routenplanungsdaten, wozu auch der bereits bestehende Routenplan gehört. Die Maschinensysteme können dann koordiniert den gemeinsamen Routenplan ändern, um das hinzukommende Maschinensystem optimal einzubinden. In ähnlicher Weise kann der Routenplan geändert werden, wenn sich ein Maschinensystem bei der Gruppe "abmeldet".

Besonders bevorzugt werden für die Bediener der Maschinensysteme mittels einer geeigneten Anzeigeeinrichtung jeweils eine auf Basis der ausgetauschten geographischen Referenzdaten erstellte gemeinsame Karte, die aktuelle Position und die optimale Route des betreffenden Maschinensystems sowie die aktuellen Positionen der sich gerade auf dem zu bearbeitenden Territorium befindenden anderen Maschinensysteme der Gruppe ausgegeben. Auf diese Weise haben alle Bediener während des Arbeitseinsatzes immer den kompletten Überblick über das aktuelle Geschehen. Besonders bevorzugt werden den Bedienern dabei nicht nur die eigene Route, sondern auch die Routen der anderen sich jeweils auf dem zu bearbeitenden Territorium befindenden Maschinensysteme der Gruppe angezeigt. Es kann so noch einmal durch die Bediener überprüft werden, ob die Routen auch nach ihrer Einschätzung optimal verlaufen oder ob an bestimmten Stellen evtl. durch fehlerhafte Planungen Kollisionsgefahr oder unnötige Wartezeiten entstehen könnten. Neben den Routen und Positionen können auch Zusatzinformationen wie Wegmarkierungen, bereits bearbeitete Fahrspuren, Hindernisse, Sperrflächen etc. angezeigt werden.

Grundsätzlich können die verschiedenen Maschinensysteme mit unterschiedlichen Koordinatensystemen arbeiten und es werden dann jeweils die übermittelten Koordinaten umgerechnet. Bei einer bevorzugten Variante arbeiten jedoch alle Maschinensysteme mit demselben Koordinatensystem mit einem genau definierten Ursprung. Es wird dabei vorzugsweise ein lokales Koordinatensystem verwendet, dessen Ursprung- beispielsweise eine Ecke des zu bearbeitenden Territoriums - in Form von Koordinaten des satellitenunterstützten Navigationssystems definiert ist, z. B. als GPS-Position mit Breitengrad, Längengrad und Elevation. Dieser "Nullpunkt" ist dann für alle Maschinensysteme identisch.

Wie bereits oben kurz erläutert, können die Maschinensysteme vollautomatisch entlang der optimierten Routen gesteuert werden, sofern die Maschinensysteme mit entsprechenden Fahrsteuerungseinheiten, d. h. Lenkautomaten, ausgestattet sind. In einem solchen Fall ist es aus sicherheitstechnischen Gründen aber immer möglich, das System durch den Bediener übersteuern zu lassen, d. h. sobald dieser bestimmte Steuerungsorgane wie Bremse, Lenkrad, Kupplung etc. betätigt, wird der Lenkautomat ausgeschaltet. Ebenso ist aber auch eine halbautomatische Steuerung bzw. eine manuelle Steuerung möglich, bei der dem Fahrer auf einer Anzeigeeinrichtung seine Route, d. h. eine bestimmte einzuhaltende Fahrspur sowie seine aktuelle Position und ggf. weitere Hilfsanzeigen wie Winkelabweichung etc. angezeigt werden, mit Hilfe derer der Fahrer manuell das Fahrzeug auf der vorgegebenen Fahrspur halten kann.

Vorzugsweise können auf Basis der Routenplanungsdaten der verschiedenen Maschinensysteme auch Sicherheitszonen definiert werden, welche den verschiedenen Maschinensystemen zugeordnet sind. In diesen Sicherheitszonen kann die automatische Steuerung der jeweils zugeordneten Maschinensysteme eingeschränkt, insbesondere auch vollständig deaktiviert werden. Typische Sicherheitszonen sind Bereiche in Straßennähe oder Bereiche in Gebieten, in denen beispielsweise aufgrund von benachbarter dichter Bewaldung o. Ä. Positionssignale nur ungenau empfangen werden können.

Bei einer bevorzugten Variante der Erfindung wird zunächst auf Basis einer ursprünglich ermittelten Referenzlinie eine abgeleitete Referenzlinie ermittelt. Beispielsweise können aus ursprünglich aufgenommenen Referenzlinien, welche den Schlagkanten entsprechen, verschobene Referenzlinien als virtuelle Leitlinien erzeugt werden, welche die Fahrspuren für die einzelnen Maschinensysteme definieren. Dabei kann bevorzugt ein fester Versatz zwischen den abgeleiteten Referenzlinien vorgesehen sein. Hierzu ist lediglich erforderlich, dass bekannt ist, welche Arbeitsbreite die Maschinen haben, die die Referenzlinien nutzen sollen. Dies ist vor allem dann sinnvoll, wenn mehrere Maschinensysteme parallel ein und dasselbe Feld bearbeiten.

Darüber hinaus können die abgeleiteten Referenzlinien auch zur Spezifizierung von Fahrgassen für spätere Maschinensysteme in einer Prozesskette definiert werden. So können beispielsweise vorzugsweise bei einem Einsatz eines Maschinensystems zur Einsaat so genannte "Spritzengassen" erstellt werden, und es werden gleichzeitig passende Referenzlinien für diese Spritzengassen generiert, die dann einer später nachfolgenden Feldspritze zur Verfügung gestellt werden.

Durch die Nutzung solcher abgeleiteten Referenzlinien zur Spezifizierung von Fahrgassen ist es insbesondere auch möglich, dass verschiedene Arbeitseinsätze innerhalb einer Prozesskette dahingehend optimiert werden, dass die jeweiligen Maschinensysteme nicht exakt die gleichen Fahrspuren benutzen, um so eine übermäßige Verdichtung des Bodens entlang der Fahrspuren zu vermeiden.

Bei einer bereits oben erwähnten bevorzugten Variante arbeitet eine bestimmte Arbeitsmaschine als "Master-Maschine" und die anderen Maschinensysteme jeweils als "Client-Maschinen". Dies kann besonders bevorzugt auch jederzeit durch die Bediener der Maschinensysteme oder einen Bediener mit spezieller Autorisierung hierzu festgelegt werden. In einem solchen Fall erfolgen die Koordination und Routenplanung dann vorzugsweise durch das Routenplanungssystem der "Master-Maschine". Diese "Master-Maschine" erhält z. B. die Routenplanungsdaten der "Client-Maschinen" und vergibt ihrerseits bei der Routenplanung Teilaufträge an die einzelnen "Client-Maschinen", um die Rechenkapazitäten optimal auszunutzen. Beispielsweise könnte diese "Master-Maschine" auf Basis der von den einzelnen Maschinensystemen erhaltenen Routenplanungsdaten, d. h. insbesondere deren Positionsdaten, deren Maschinenparameter und der ermittelten Referenzdaten, den zu bearbeitenden Schlag in Teilgebiete (Beete) aufteilen und den verschiedenen "Client-Maschinen" zuweisen. Die Aufteilung des Schlages in Beete und die Zuweisung zu den einzelnen "Client-Maschinen" kann dabei unter Berücksichtigung der Maschinenparameter insoweit erfolgen, dass beispielsweise einer leistungsfähigeren Maschine mit größerer Arbeitsbreite ein größeres Beet zugewiesen wird und einer Maschine mit kleinerer Arbeitsleistung und kleinerer Arbeitsbreite ein entsprechend kleineres Beet. Die einzelnen "Client-Maschinen" können dann ihre Routen innerhalb der Beete selbständig planen und die geplanten Routen an die "Master-Maschine" zurücksenden. In der dortigen Routenplanungseinrichtung und/oder Koordinationseinrichtung wird dann überprüft, inwieweit die einzelnen Routen koordiniert verlaufen oder ob es zu problematischen Überschneidungen kommt. Insbesondere kann die "Master-Maschine" auch Rahmenbedingungen für die Planung der Routen in den Beeten durch die "Client-Maschinen" vorgeben, um bereits so eine optimale Koordinierung sicherzustellen und Kollisionen und Wartezeiten zu vermeiden.

Die Erfindung wird im Folgenden unter Hinweis auf die beigefügten Figuren anhand von Ausführungsbeispielen noch einmal näher erläutert. Hieraus ergeben sich auch weitere Einzelheiten und Vorteile der Erfindung. Es zeigen:
Figur 1 eine schematische Darstellung zweier Maschinensysteme mit erfindungsgemäßen Steuerungseinrichtungen,
Figur 2 eine Darstellung möglicher Referenzlinien bei einem Territorium mit polygonen Außenkonturen,
Figur 3 ein in Fahrstrecken unterteiltes, von zwei Arbeitsmaschinen abzuarbeitendes Territorium,
Figur 4 ein Territorium, welches von einem Arbeitsverband mit drei Maschinensystemen nach einem Routenplan gemäß einem ersten Ausführungsbeispiel abzuarbeiten ist,
Figur 5 das Territorium gemäß Figur 4, welches von einem Arbeitsverband mit drei Maschinensystemen nach einem Routenplan gemäß einem zweiten Ausführungsbeispiel abzuarbeiten ist,
Figur 6 eine Darstellung einer Anzeigeeinrichtung 9 mit einer darauf angezeigten Feldkarte,
Figur 7 ein Territorium mit eingezeichneten Sicherheitsbereichen,
Figur 8 ein Territorium mit auf Basis von Referenzlinien erstellten Fahrspuren bei der Einsaat und zusätzlich definierten Spritzengassen gemäß einem ersten Ausführungsbeispiel,
Figur 9 ein Territorium mit auf Basis von Referenzlinien erstellten Fahrspuren bei der Einsaat und zusätzlich definierten Spritzengassen gemäß einem zweiten Ausführungsbeispiel.

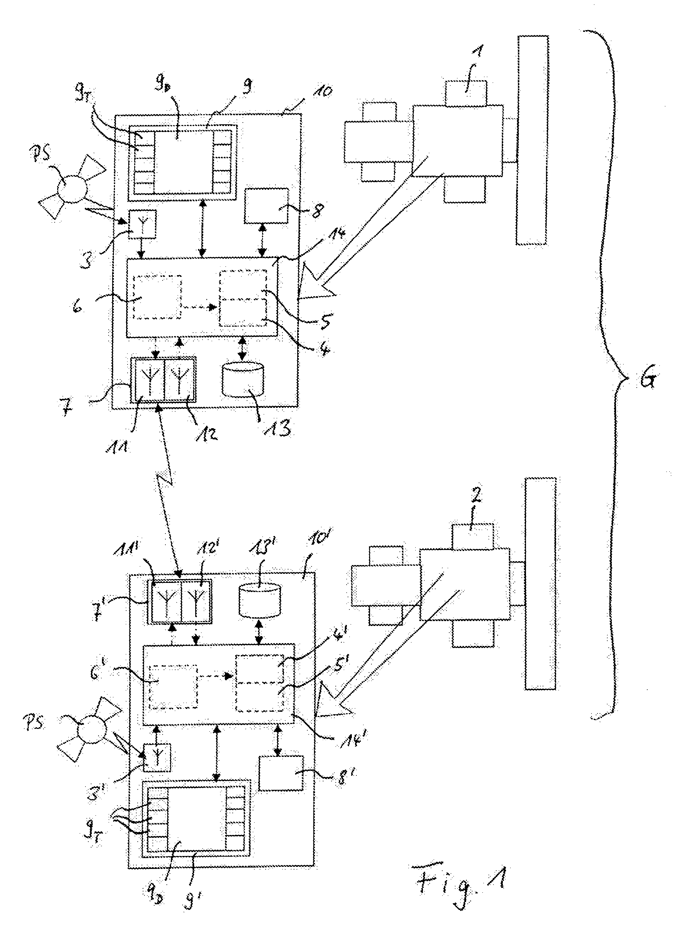

Bei dem in Figur 1 dargestellten Ausführungsbeispiel des erfindungsgemäßen Steuerungssystems werden der Einfachheit halber nur zwei gleichartig aufgebaute Maschinensysteme 1, 2, hier zwei Mähdrescher 1, 2, dargestellt, die z. B. gemeinsam in einer Gruppe G (d.h. einem Maschinenverband) eingesetzt werden können, um ein größeres Areal in möglichst kurzer Zeit abzuarbeiten.

Der Aufbau und die Funktionsweise solcher Mähdrescher 1, 2 sind dem Fachmann ebenso wie geeignete Steuerungssysteme zur Steuerung der Mähdrescher 1, 2 grundsätzlich bekannt. Des Weiteren sind beispielsweise aus der EP 0 821 296 A1 und der DE 10 2004 027 242 A2 geeignete Routenplanungssysteme bekannt, auf die hier voll inhaltlich verwiesen wird. Daher sind in Figur 1 nur noch die zur Erläuterung der Erfindung wesentlichen Komponenten schematisch dargestellt, wobei beide Mähdrescher 1, 2 bezüglich dieser Komponenten identisch aufgebaut sind.

Zu den wesentlichen Komponenten der Steuerungseinrichtungen 10, 10' (die für beide Maschinensysteme ebenfalls identisch aufgebaut sind) zählen hier zum einen jeweils eine Positionsermittlungseinrichtung 3, 3', beispielsweise ein GPS-Empfänger, welcher GPS-Signale von geeigneten Positionssatelliten PS erhält. Vorzugsweise handelt es sich hierbei um einen GPS-Empfänger, der in einem korrigierten satellitengestützten System, beispielsweise mit DGPS o. Ä. arbeitet, um eine möglichst exakte Positionsbestimmung - bevorzugt auf wenige Zentimeter genau - durchzuführen.

Die Steuerungseinrichtungen 10, 10' umfassen darüber hinaus jeweils eine Routenplanungsdaten-Ermittlungseinrichtung 6, 6'. Mit dieser Routenplanungsdaten-Ermittlungseinrichtung 6, 6' können beispielsweise beliebige Referenzdaten, insbesondere Referenzlinien, ermittelt werden. Hierzu kann z. B. mittels der Positionsermittlungseinrichtung 3 die aktuelle Position des Mähdreschers 1, 2 ermittelt werden und es können mit entsprechenden Aufzeichnungsmitteln entlang einer abgefahrenen Strecke jeweils die Positionen aufgezeichnet werden, um daraus, wie bereits oben beschrieben, Referenzlinien oder auch Referenzpunkte zu generieren. Zusätzlich können Informationen zu den Referenzpunkten an einer Bedienerschnittstelle 9, 9' eingegeben werden. Bei der dargestellten Steuerungseinrichtung 10, 10' besteht diese Bedienerschnittstelle aus einer Anzeigeeinheit 9, 9' in Form eines Touch-Displays mit einer mittleren Displayfläche 9_{D}, auf der verschiedene Informationen für den Benutzer angezeigt werden können, sowie am Rand angeordneter virtueller Tasten 9_{T}. Über diese kann der Bediener Informationen an das System eingeben, beispielsweise Zusatzinformationen bei der Erstellung von Referenzdaten. Insbesondere kann der Bediener hiermit einen Start- und einen Endpunkt zur Aufzeichnung einer Referenzlinie eingeben. Auf der Anzeigeeinheit 9 können auch, wie später noch näher erläutert wird, die jeweils geplanten Routen sowie verschiedene Positionsdaten an den Bediener ausgegeben werden.

Teil der Steuerungseinrichtungen 10, 10' ist hier auch jeweils eine Kommunikationseinrichtung 7, 7' mit einer Sendeeinheit 11, 11' und einer Empfangseinheit 12, 12', damit die verschiedenen Steuerungseinrichtungen 10, 10' der Mähdrescher 1, 2 miteinander kommunizieren können und insbesondere Routenplanungsdaten austauschen können.

Des Weiteren umfassen die Steuerungseinrichtung 10, 10' jeweils eine Routenplanungseinrichtung 5, 5' und eine Koordinierungseinrichtung 4, 4'.

Die Routenplanungsdaten werden jeweils an die Routenplanungseinrichtung 5, 5' übergeben, welche aufgrund dieser Daten eine optimale Route plant. Erfindungsgemäß können dabei die Routenplanungsdaten aller Maschinensysteme 1, 2 innerhalb der Gruppe G herangezogen werden, da diese ja über die Kommunikationseinrichtung 7 ausgetauscht werden. Hierbei sorgt erfindungsgemäß die Koordinierungseinrichtung 4, 4' für ein koordiniertes Vorgehen, d. h. die Maschinensysteme 1, 2 bzw. deren Routenplanungseinrichtungen 5, 5' generieren einen gemeinsamen Routenplan, welcher die optimierten Routen für die einzelnen Maschinensysteme 1, 2 enthält. Dabei wird an dieser Stelle noch einmal darauf hingewiesen, dass die Routenplanungsdaten auch innerhalb der Routenplanungseinrichtung 5, 5' bereits geplante Teilrouten umfassen, damit alle Routenplanungseinrichtungen 5, 5' über die Planungen der anderen Maschinensysteme informiert sind und diese bei der Koordinierung der Routenplanung berücksichtigen können.

Die Routenplanungsdaten-Ermittlungseinrichtung 6, 6', die Routenplanungseinrichtung 5, 5' sowie die Koordinierungseinrichtung 4, 4' sind vorzugsweise in Form von Softwaremodulen auf einem zentralen Steuerungsprozessor 14, 14' der jeweiligen Steuerungseinrichtungen 10, 10' realisiert.

Die Steuerungseinrichtungen 10, 10' umfassen außerdem jeweils eine geeignete Speichereinrichtung 13, 13'. In dieser werden bzw. sind unter anderem geeignete Routenplanungsdaten hinterlegt, insbesondere generierte Referenzdaten, welche Daten über das abzuarbeitende Territorium wie Schlaggrenzen, Feldfruchtdaten etc. enthalten, aber auch die Maschinenparameter des jeweiligen landwirtschaftlichen Maschinensystems selbst sowie die der anderen in der Gruppe befindlichen Maschinensysteme, soweit dies notwendig ist.

Bei dem in Figur 1 gezeigten Ausführungsbeispiel umfassen die Steuerungseinrichtungen 10, 10' auch jeweils eine Fahrsteuerungseinrichtung 8, 8', d. h. einen Lenkautomaten, der von der Routenplanungseinrichtung 5, 5' angesteuert wird, um so den jeweiligen Mähdrescher 1, 2 exakt entlang der für diesen Mähdrescher 1, 2 vorgesehenen optimierten Routen zu steuern.

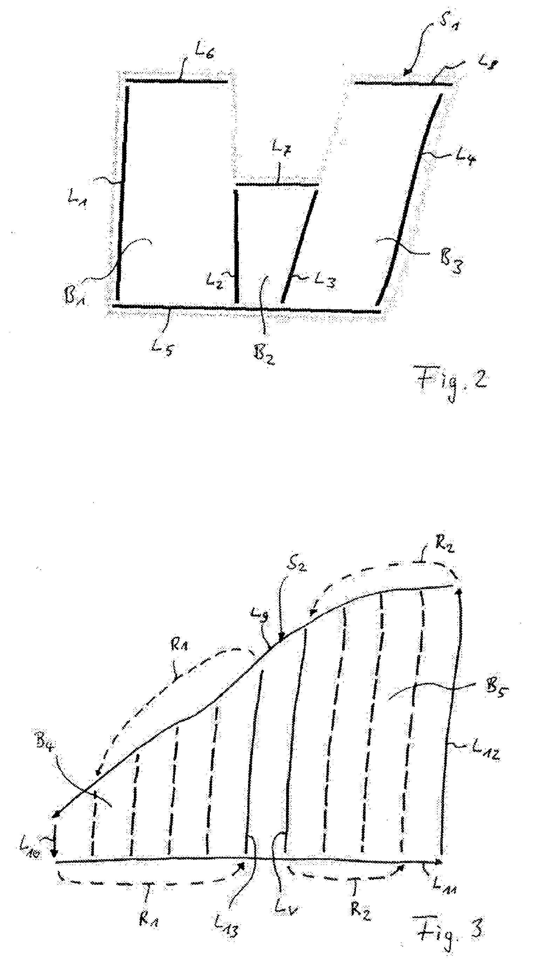

Anhand der nachfolgenden Figuren 2 bis 5 werden verschiedene Beispiele erläutert, wie mit Hilfe der erfindungsgemäßen vernetzten bzw. koordinierten Routenplanungseinrichtungen 5, 5' der verschiedenen Maschinensysteme 1, 2 innerhalb einer Gruppe G in verschiedensten Situationen eine optimierte Routenplanung durchgeführt werden kann.

Figur 2 zeigt, wie durch eine geschickte Aufnahme bestimmter Referenzlinien L₁, L₂, L₃, L₄, L₅, L₆, L₇, L₈ gesonderte Flächenbereiche, d.h. verschiedene Beete B₁, B₂, B₃ in einem Schlag S₁ mit polygonen Außenkanten bestimmt werden können. So können beispielsweise zunächst die Referenzlinien L₁, L₄, L₅, L₆, L₇, L₈ abgefahren werden, die die Außenkanten des Schlages S₁ definieren. Weitere Referenzlinien L₂, L₃, können dazu dienen um den Schlag S₁ in drei Beete B₁, B₂, B₃ zu unterteilen. Diese Referenzlinien L₁, L₂, L₃, L₄, L₅, L₆, L₇, L₈ können von einem ersten Maschinensystem beispielsweise bei der Einsaat von einem Schlepper mit entsprechender Säheinrichtungen ermittelt und dann an weitere Maschinensysteme übermittelt werden, die später in der Prozesskette verwendet werden. Anhand dieser Referenzlinien können die nachfolgenden Maschinensysteme ihre eigenen optimalen Routen planen. Insbesondere können bei einer parallelen Bearbeitung dieses Schlages S₁ den einzelnen Beeten B₁, B₂, B₃ verschiedene Maschinensysteme eines Maschinenverbandes zugeordnet werden, welche für sich anhand der für dieses Beet B₁, B₂, B₃ geltenden Referenzlinien eine optimale Route ermitteln, mit der das betreffende Maschinensystem das Beet B₁, B₂, B₃ bearbeitet. Dabei sollte insbesondere in den Grenzgebieten und Vorgewendebereichen auf einen koordinierten Ablauf bei der Routenplanung geachtet werden, d.h. es wird vorzugsweise ein Gesamt-Routenplan erstellt, in den die jeweiligen Routen für die einzelnen Beete B₁, B₂, B₃ so integriert sind, dass eine Optimierung hinsichtlich des kompletten Arbeitseinsatzes (und nicht nur hinsichtlich der einzelnen Beete B₁, B₂, B₃) erfolgt. Sofern die Referenzlinien L₁, L₂, L₃, L₄, L₅, L₆, L₇, L₈ erst bei Einsatz eines parallel arbeitenden Maschinenverbands ermittelt werden müssen, können die einzelnen Maschinensysteme vorzugsweise auch jeweils einen Teil dieser Referenzlinien L₁, L₂, L₃, L₄, L₅, L₆, L₇, L₈ ermitteln und untereinander austauschen, um möglichst schnell alle Referenzdaten zur Routenplanung zu erhalten.

Ein Beispiel hierfür ist in Figur 3 dargestellt. Hier wird ein Schlag S₂ von zwei Maschinensystemen, beispielsweise zwei Mähdreschern (nicht dargestellt), zumindest teilweise parallel bearbeitet. Hierzu fährt das erste Maschinensystem entlang der oberen Schlagkante und schneidet dabei den Vorgewendebereich am oberen Feldrand frei. Dabei wird gleichzeitig die obere Kontur des Schlages S₂ als erste Referenzlinie L₉ aufgezeichnet. Gleichzeitig fährt das zweite Maschinensystem entlang der in Figur 3 unteren Kante des Schlages S₂ und schneidet dort den Vorgewendebereich frei, wobei die untere Referenzlinie L₁₁ erfasst wird. Jeder der Mähdrescher übersendet dann die von ihm ermittelte Referenzlinie L₉, L₁₁ an den jeweils anderen Mähdrescher. Der zweite Mähdrescher fährt dann am rechten Rand die erste Spur von unten nach oben ab und zeichnet dabei eine weitere Referenzlinie L₁₂ auf. Parallel dazu fährt der erste Mähdrescher die ganz linke kürzere Spur von oben nach unten ab und erfasst so die Referenzlinie L₁₀. Somit sind sämtliche Schlagkanten erfasst und die Routenplanungseinrichtungen können koordiniert die optimalen Routen für die Mähdrescher planen. Im dargestellten Ausführungsbeispiel wird hierzu der Schlag S₂ wieder in zwei Beete B₄, B₅ unterteilt, da dies hier die optimale Arbeitsstrategie ist. Die beiden Mähdrescher ermitteln dann ihre Teilrouten weitgehend selbständig, berücksichtigen und nutzen aber die Planungsdaten des jeweils anderen Mähdreschers. Dabei kann der erste Mähdrescher nach entsprechender Beetaufteilung seine Route schon planen und anfahren, während der zweite Mähdrescher noch die längere rechte Schlagkante abfährt. Der hierbei bereits ermittelte Teil der Referenzlinie L₁₂ kann immer aktuell an den ersten Mähdrescher übermittelt und in die Planung einbezogen werden. So folgt hier der zweite Mähdrescher zunächst seiner Route R₄ bis ungefähr zum mittleren Bereich des Schlages S₂, entlang derer der Schlag S₂ in die zwei Beete B₄, B₅ unterteilt werden soll. Er schneidet dann eine mittlere Spur frei und erfasst dabei zugleich eine weitere Referenzlinie L₁₃. Diese Referenzlinie L₁₃ wird dann um eine Schnittbreite nach rechts verschoben, so dass sich eine weitere Referenzlinie Lᵥ ergibt, welche als virtuelle Leitlinie für die Bearbeitung an der Grenze der beiden Beete B₄, B₅ für den zweiten Mähdrescher geeignet ist. Der zweiten Mähdrescher kann dann entsprechend seine Routenplanung vornehmen und direkt von der rechten Randkante entlang der Route R₂ eine Fahrspur anfahren, welche der abgeleiteten Referenzlinie Lᵥ entspricht, um nach Abarbeiten dieser Spur dann weiter entlang der von ihm geplanten optimalen Route R₂ zu verfahren.

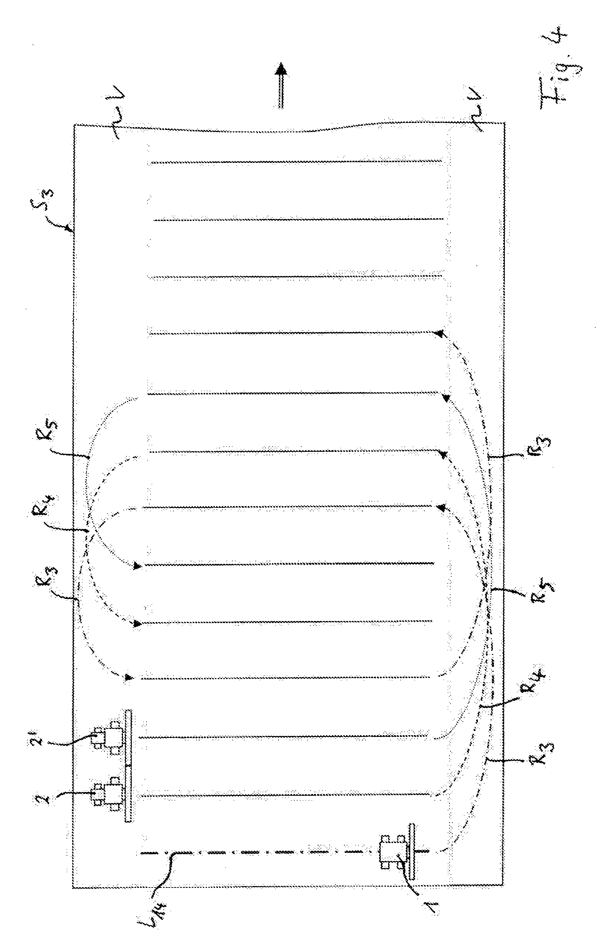

In Figur 4 ist eine erste Variante für einen möglichen Einsatz des Steuerungsverfahrens auf einem relativ großen rechtwinkligen Schlag S₃ dargestellt, der mit drei in einem Arbeitsverband parallel arbeitenden Mähdreschern 1, 2, 2' abgearbeitet wird. Die Mähdrescher 1, 2, 2' bzw. deren Steuerungseinrichtungen können wie in Figur 1 dargestellt aufgebaut sein. Da es sich um ein rechtwinkliges Feld S₃ handelt, reicht es aus, wenn der erste Mähdrescher 1 zunächst eine erste Kante, hier die linke Kante des Felds S₃, abfährt und dabei die Referenzlinie L₁₄ generiert wird. Dieser Mähdrescher 1 übersendet dann die Referenzlinie L₁₄ an die weiteren Mähdrescher 2, 2' des Arbeitsverbandes. Zusätzlich werden weitere Informationen ausgetauscht, beispielsweise hier, dass die Arbeitsbreite aller im Arbeitsverband tätigen Mähdrescher gleich ist und dass nach einer gemeinsamen Arbeitsstrategie jeder Mähdrescher nur jede dritte Spur abzuernten hat. Daraufhin können von den einzelnen Mähdreschern 1, 2, 2' jeweils die optimalen Routen R₃, R₄, R₅ berechnet werden, und die Mähdrescher 1, 2, 2' können jeweils gemäß diesen angezeigten Routen R₃, R₄, R₅ gesteuert werden. Auf diese Weise können sehr schnell große Feldflächen abgearbeitet werden, wobei es aufgrund der geschickten Anwahl der Spuren nicht notwendig ist, dass die einzelnen Mähdrescher 1, 2, 2' lange Wendemanöver mit Umstellen der Fahrtrichtung durchführen, sondern sie können direkt die nächste von ihnen abzuerntende Spur anfahren. Da die einzelnen Mähdrescher 1, 2, 2' bzw. deren Routenplanungssysteme in permanentem Datenaustausch untereinander stehen und insbesondere an die jeweils anderen Mähdrescher die eigene Position übersenden, kann die Routenplanung so durchgeführt werden, dass es nicht zu Kollisionen bzw. zu Wartezeiten zur Vermeidung von Kollisionen insbesondere in den Vorgewendebereichen V kommen kann.

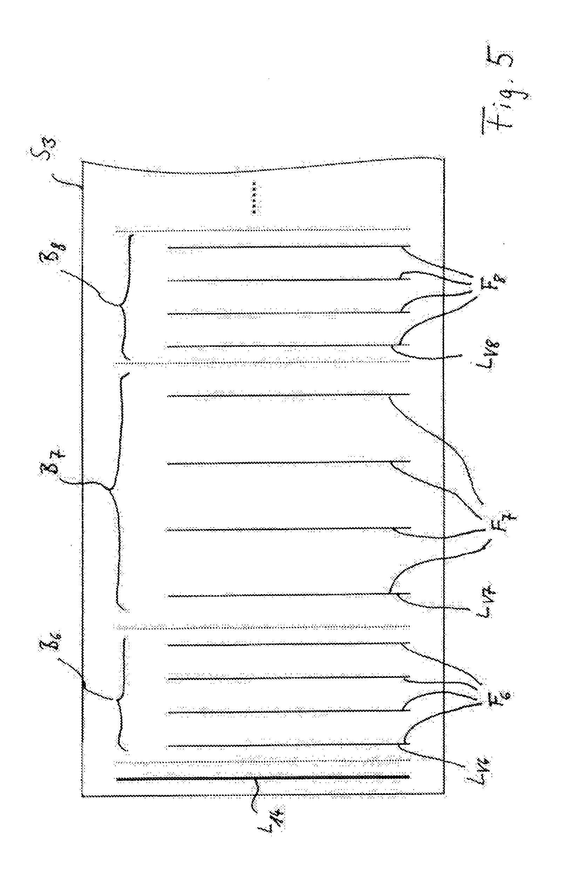

Figur 5 zeigt noch einmal das gleiche Feld S₃, hier jedoch bei der gemeinsamen Bearbeitung durch die drei Maschinensysteme mit einer anderen Arbeitsstrategie. Auch hier wird zunächst durch Abfahren der ganz rechten Feldkante durch das erste Maschinensystem die erste Referenzlinie L₁₄ erfasst. Hier sollen jedoch drei Maschinensysteme mit unterschiedlichen Arbeitsbreiten eingesetzt werden. Daher wird der Schlag S₃ in geschickter Weise in Beete B₆, B₇, B₈ unterteilt, wobei bei der Aufteilung berücksichtigt wird, welches Beet B₆, B₇, B₈ von welchem Maschinensystem mit welcher Arbeitsbreite abzuarbeiten ist. Die Beetgrößen werden dabei so gewählt, dass jedes Maschinensystem genau vier Fahrspuren F₆, F₇, F₈ zur Abarbeitung des jeweiligen Beets B₆, B₇, B₈ benötigt. Durch die unterschiedliche Spurbreite ergeben sich dementsprechend unterschiedliche Beetbreiten.

Die Aufteilung des Schlags S₃ in die verschiedenen Beete B₆, B₇, B₈ kann beispielsweise durch das erste Maschinensystem vorgenommen werden, welches auch die Referenzlinie L₁₄ erfasst. Hierzu müssen diesem zuvor die Arbeitsbreiten der anderen Maschinensysteme übergeben werden. Die Routenplanungseinrichtung des ersten Maschinensystems leitet dann beispielsweise von der ursprünglich aufgenommenen Referenzlinie L₁₄ für die einzelnen Beete B₆, B₇, B₈ jeweils virtuelle Referenzlinien L_{V6}, L_{V7}, L_{V8} ab. Diese werden gemeinsam mit den Informationen über die Beetbreite an die für die Bearbeitung des jeweiligen Beets B₆, B₇, B₈ vorgesehenen Maschinensysteme übermittelt. Die einzelnen Maschinensysteme können dann auf Basis der Referenzlinien L_{V6}, L_{V7}, L_{V8} selber die weiteren Fahrspuren F₆, F₇, F₈ innerhalb des von ihnen abzuarbeitenden Beets B₆, B₇, B₈ bestimmen und sich eine optimale Route unter Berücksichtigung der eigenen Maschinenparameter wählen. Die optimalen Routen werden dann an das erste Maschinensystem zurückgeliefert, welches hier als ein "Master-Maschinensystem" arbeitet und kontrolliert, ob es in den Grenzbereichen zwischen den Beeten B₆, B₇, B₈ nicht zu Kollisionen kommen kann. D. h. es wird z. B. dafür gesorgt, dass die Routen so gewählt sind, dass das im Beet B₁ arbeitende Maschinensystem erst dann die an das Beet B₂ angrenzende letzte Fahrspur F₆ bearbeitet, wenn die an das Beet B₆ angrenzende erste Fahrspur F₇ des zweiten Beets B₇ bereits abgeerntet ist.

Es ist klar, dass es sich bei den in den Figur 3 bis 5 dargestellten Ausführungsbeispielen nur um relativ kleine Felder bzw. Ausschnitte von Feldern handelt, die lediglich prinzipielle Möglichkeiten zur Feldbearbeitung wiedergeben sollen. In der Realität wird es sich um erheblich größere Territorien mit einer Vielzahl von Fahrspuren handeln, wenn zur Bearbeitung ein Verband mit mehreren parallel arbeitenden Maschinensystemen eingesetzt werden soll. Anhand der Beispiele lässt sich aber schnell erfassen, welche Vorteile das erfindungsgemäße Verfahren einer koordinierten Routenplanung bietet.

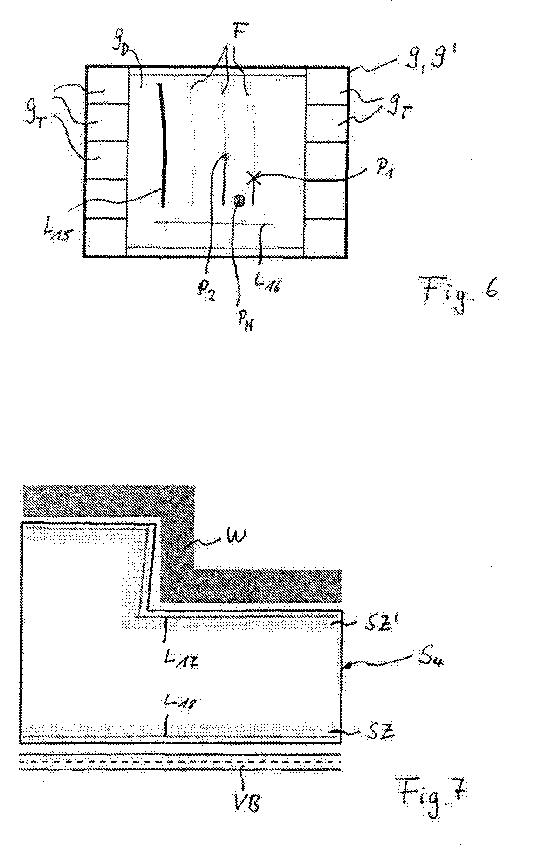

Figur 6 zeigt noch einmal detaillierter eine Anzeigeeinrichtung 9, 9' mit einer Displayfläche 9_{D} und seitlich angeordneten Tasten 9_{T} zur Bedienung einer Steuerungseinrichtung 10, 10' durch einen Fahrer. Auf der Displayfläche 9_{D} werden verschiedene Referenzlinien, hier eine Referenzlinie L₁₅ für die Definition von Fahrspuren F und eine Referenzlinie L₁₆ für den Vorgewendebereich, angezeigt. Außerdem können die Positionen P_{H} von ermittelten Hindernissen, beispielsweise Strohballen, Strommasten, Bäumen oder dergleichen, die eigene Position P₁ des Fahrzeugs sowie die Position P₂ eines anderen Maschinensystems angezeigt werden, welches beispielsweise auf einer parallelen Fahrspur fährt. Es handelt sich hierbei um eine "gemeinsame Anzeige", welche allen Fahrern der beteiligten Maschinensysteme zur Verfügung gestellt wird, so dass diese jeweils alle Informationen über das eigene Maschinensystem und die fremden Maschinensysteme erhalten. Insbesondere kann auch durch unterschiedliche Anzeigeeigenschaften der Fahrspuren angezeigt werden, welcher Bereich der Fahrspuren bereits bearbeitet wurde und welche noch zu bearbeiten sind. Außer den Fahrspuren F, wie hier dargestellt, können selbstverständlich auch komplette Routen einschließlich der Routenteile in den Vorgewendebereichen angezeigt werden. Das heißt, es werden nicht nur die Fahrspuren sowie die eigene Position und die Position der anderen Maschinensysteme angezeigt, sondern auch, welche der Fahrspuren von den jeweiligen Maschinensystemen abzuarbeiten sind und wie die Maschinensysteme in den Vorgewendebereichen jeweils die Fahrspuren wechseln.

Mit Hilfe der Tasten 9_{T} kann der Fahrer im Übrigen auch die Darstellungsart wählen und beispielsweise von automatischem Fahrbetrieb in einen Handbetrieb umschalten. In einem solchen Handbetrieb werden dem Fahrer beispielsweise auf der Displayfläche 9_{D} eine virtuelle Leitlinie und ein Symbol für die Position des von ihm bedienten Maschinensystems 1, 2 angezeigt, so dass die Abweichung des Symbols von der virtuellen Leitlinie, die der Abweichung des Maschinensystems von der zu fahrenden Route entspricht, angezeigt wird. Mit einer solchen Führungshilfe kann der Fahrer das Fahrzeug manuell relativ exakt entlang der gewünschten Route steuern.

Wie bereits oben erwähnt, können innerhalb der Routenplanung auch bestimmte Sicherheitszonen festgelegt werden, die den verschiedenen Maschinensystemen zugeordnet werden. Ein Beispiel ist hierfür in Figur 7 dargestellt. Gezeigt ist dort ein Schlag S₄, welcher an der in der Figur unteren Kante an einen öffentlichen Verkehrsbereich VB, hier eine Straße, angrenzt. Durch diese Straße besteht ein erhöhtes Sicherheitsrisiko durch vorbeifahrende Fahrzeuge, d. h. es ist in diesem Bereich besonders darauf zu achten, dass beim Wenden eines Maschinensystems keine Maschinenteile in den Verkehrsbereich VB hineinragen. Mittels einer entlang des Verkehrsbereichs VB verlaufenden Referenzlinie L₁₈, welche bei Beginn des Arbeitseinsatzes aufgezeichnet wurde, wird für jedes Maschinensystem eine Sicherheitszone SZ definiert, welche vorzugsweise von bestimmten Arbeitsparametern, beispielsweise dem Wenderadius und der Arbeitsbreite des Maschinensystems, abhängt. Die Sicherheitszone SZ wird dann dem jeweiligen Maschinensystem zugeordnet. Innerhalb dieser Sicherheitszone SZ kann beispielsweise eine automatische Steuerung des betreffenden Maschinensystems eingeschränkt oder sogar ganz abgeschaltet werden. Eine andere Sicherheitszone SZ' befindet sich an den in Figur 7 oberen Schlagkanten des Schlages S₄. Hier grenzt der Schlag S₄ an einen bewaldeten Bereich W an. Durch die Bewaldung gibt es eine starke Unsicherheit bezüglich des Empfangs von Satellitensignalen für die Positionsbestimmung. Daher wird hier mit Hilfe der Referenzlinie L₁₇, welche entlang der oberen Schlagkante verläuft, eine weitere Sicherheitszone SZ' für die jeweiligen Maschinensysteme definiert und diese den Maschinensystemen zugeordnet.

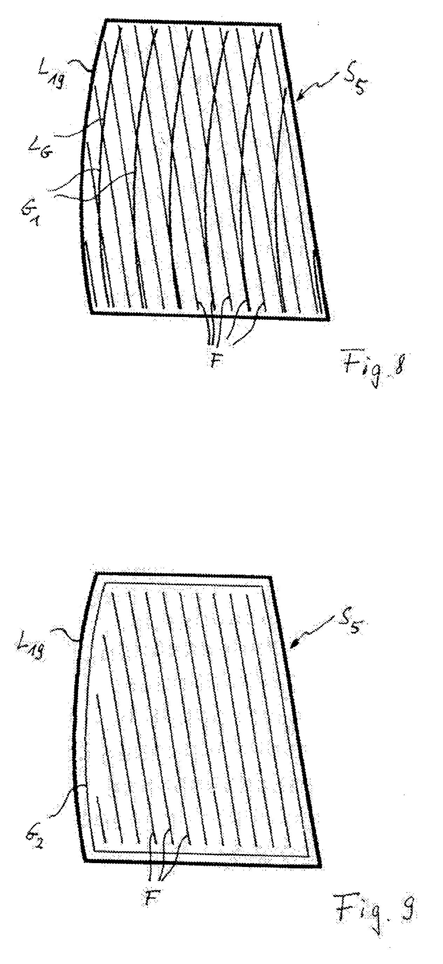

In den Figuren 8 und 9 wird beispielhaft dargestellt, wie mittels Referenzlinien ein Raster für Fahrgassen G₁, G₂, insbesondere Spritzengassen, erstellt werden kann, welches dann für die Steuerung von Fahrgassenschaltungen oder Teilbreitenschaltungen verwendet werden kann. In beiden Varianten werden unterschiedliche Fahrspuren F und Fahrgassen G₁, G₂, beispielsweise für die Einsaat auf dem betreffenden Schlag S₅ und für nachfolgende Arbeitsprozesse zur Ausbringung von Spritz- und Düngemitteln festgelegt. Hierbei wird zunächst eine Referenzlinie L₁₉ ermittelt, welche der kompletten Umrandung des Schlages S₅ entspricht. Es werden dann für die Einsaat Fahrspuren F parallel zur rechten Schlagkante berechnet, wobei diese Fahrspuren einen Abstand entsprechend der Arbeitsbreite der Sämaschine aufweisen.

Gemäß der Variante von Figur 8 wird entlang der linken, bauchigen Schlagkante eine verschobene Referenzlinie L_{G} ermittelt, welche dazu dient, Fahrgassen (Spritzgassen) G₁ für die nachfolgende Feldspritze zu generieren. Der Abstand dieser Spritzengassen G₁ ist entsprechend der Arbeitsbreite der Feldspritze gewählt. Diese Spritzengassen G₁ treffen an unterschiedlichen Stellen auf die Fahrspuren F der Sämaschine. Das Maschinensystem kann folglich bereits bei der Einsaat die geplanten Spritzengassen G₁ entsprechend berücksichtigen und durch die Fahrgassenschaltung automatisch gesteuert dafür sorgen, dass im Bereich der Spritzengassen G₁ keine Einsaat erfolgt.

In Figur 9 ist eine Alternative gezeigt, bei der das Feld S₅ von einer umlaufenden Spritzengasse G₂ eingerahmt ist. Dieses Verfahren bietet sich insbesondere bei kleineren Schlägen S₅ für nachfolgende Feldspritzen und Mineraldüngerstreuer an.

Es wird abschließend noch einmal darauf hingewiesen, dass es sich bei den in den Figuren dargestellten Maschinensystemen und Steuerungssystemen sowie den im Zusammenhang damit erläuterten konkreten Verfahren lediglich um Ausführungsbeispiele handelt, welche vom Fachmann in vielfacher Hinsicht variiert werden können, ohne den Rahmen der Erfindung zu verlassen. Es wird außerdem der Vollständigkeit halber darauf hingewiesen, dass die Verwendung der unbestimmten Artikel "ein" bzw. "eine" nicht ausschließt, dass die betreffenden Merkmale auch mehrfach vorhanden sein können.

### Bezugszeichenliste

- 1: Maschinensystem / Mähdrescher
- 2, 2': Maschinensystem / Mähdrescher
- 3, 3': Positionsermittlungseinrichtung
- 4, 4': Koordinierungseinrichtung
- 5, 5': Routenplanungseinrichtung
- 6, 6': Routenplanungsdaten-Ermittlungseinrichtung
- 7, 7': Kommunikationseinrichtung
- 8, 8': Fahrsteuerungseinrichtung
- 9, 9': Touch-Display
- 9_{D}: Displayfläche
- 9_{T}: Taste
- 10, 10': Steuerungseinrichtung
- 11, 11': Sendeeinheit
- 12, 12': Empfangseinheit
- 13, 13': Speichereinrichtung
- 14, 14': Steuerungsprozessor
- P₁, P₂: Positionen der Maschinensysteme
- P_{H}: Hindernisposition
- V: Vorgewendebereich
- VB: Verkehrsbereich
- W: bewaldeter Bereich
- G₁, G₂: Fahrgassen
- SZ, SZ': Sicherheitszonen
- S₁, S₂...., S₅: Schlag
- L₁, L₂, ..., L₁₉: Referenzlinien
- R₁, R₂, ..., R₅: Routen
- B₁, B₂, ..., B₈: Beete
- F, F₆, F₇, F₈: Fahrspuren
- L_{V}, L_{G},: L_{V6}, L_{V7}, L_{V8} abgeleitete Referenzlinien

## Patentansprüche

1. Verfahren zur Erstellung eines Routenplans für eine Gruppe (G) von landwirtschaftlichen Maschinensystemen (1, 2, 2') für die Bearbeitung eines zu bearbeitenden Territoriums (S1, S2, S3, S4, S5), bei dem
- die Maschinensysteme (1, 2, 2') jeweils Routenplanungsdaten-Ermittlungseinrichtungen (6, 6') aufweisen und in Datenaustausch untereinander stehen,
- auf Basis von ausgetauschten Routenplanungsdaten (L₁, L₂, ...,L₁₉, Lᵥ, L_{V6}, LV7, L_{V8}, L_{G}, SZ, SZ') ein gemeinsamer Routenplan für das betreffende Territorium (S₁, S₂, S₃, S₄, S₅) erstellt wird,
wobei der gemeinsame Routenplan dynamisch geändert wird, wenn ein neues Maschinensystem zur Gruppe (G) hinzukommt und innerhalb der Gruppe (G) angemeldet wird oder ein Maschinensystem die Gruppe (G) verlässt und von der Gruppe (G) abgemeldet wird.

2. Verfahren nach Anspruch 1, **dadurch gekennzeichnet, dass** die Routenplanungsdaten (L₁, L₂, ...,L₁₉, Lᵥ, L_{V6}, LV7, L_{V8}, L_{G}, SZ, SZ') geographische Referenzdaten (L₁, L₂, ..., L₁₉) umfassen, welche mit Hilfe der Maschinensysteme (1, 2, 2') ermittelt werden.

3. Verfahren nach Anspruch 1 oder 2, **dadurch gekennzeichnet, dass** das zu bearbeitende Territorium (S₁, S₂, S₃) auf Basis der Routenplanungsdaten (L₁, L₂, ...,L₁₄) in Teilgebiete (B₁, B₂, B₈) unterteilt wird.

4. Verfahren nach Anspruch 3, **dadurch gekennzeichnet, dass** von jedem Maschinensystem ein Teilroutenplan für ein bestimmtes Teilgebiet (B₄, B₅, B₆, B₇, B₈) des zu bearbeitenden Territoriums (S₂, S₃) ermittelt wird.

5. Verfahren nach einem der Ansprüche 1 bis 4, **dadurch gekennzeichnet, dass** die Maschinensysteme das Territorium (S₅) zeitlich nacheinander bearbeiten.

6. Verfahren nach einem der Ansprüche 1 bis 4, **dadurch gekennzeichnet, dass** die Maschinensysteme (1, 2, 2') ein Territorium (S₂, S₃) zumindest zeitweise parallel bearbeiten.

7. Verfahren nach einem der Ansprüche 1 bis 6, **dadurch gekennzeichnet, dass** wiederholt aktuelle Positionsdaten der einzelnen Maschinensysteme (1, 2, 2') ermittelt werden, die an die jeweils anderen Maschinensysteme (1, 2, 2') übersandt werden.

8. Verfahren nach einem der Ansprüche 1 bis 7, **dadurch gekennzeichnet, dass** für die Bediener der Maschinensysteme (1, 2) mittels einer Anzeigeeinrichtung (9) jeweils eine auf Basis der geographischen Referenzdaten erstellte Karte, die aktuelle Position (P₁) und die optimale Route des betreffenden Maschinensystems (1) sowie die aktuellen Positionen (P₂) von sich auf dem zu bearbeitenden Territorium befindenden anderen Maschinensystemen (2) der Gruppe (G) ausgegeben werden.

9. Verfahren nach Anspruch 8, **dadurch gekennzeichnet, dass** dem Bediener eines Maschinensystems (1, 2) die Routen von jeweils sich auf dem zu bearbeitenden Territorium befindenden anderen Maschinensystemen der Gruppe angezeigt werden.

10. Verfahren zur Steuerung einer Gruppe (G) von landwirtschaftlichen Maschinensystemen (1, 2, 2') bei der Bearbeitung eines zu bearbeitenden Territoriums (S₁, S₂, S₃, S₄, S₅), bei dem gemäß einem der Ansprüche 1 bis 9 ein gemeinsamer Routenplan erstellt wird, der den einzelnen Maschinensystemen (1, 2) zugeordnete, optimierte Routen (R₁, R₂, R₃, R₄, R₅) zur Bearbeitung des Territoriums (S₁, S₂, S₃, S₄, S₅) enthält, und die Maschinensysteme (1, 2, 2') entlang der ihnen jeweils zugeordneten Route (R₁, R₂, R₃, R₄, R₅) gefahren werden.

11. Routenplanungssystem zur Erstellung eines Routenplans für eine Gruppe (G) von landwirtschaftlichen Maschinensystemen (1, 2, 2') für die Bearbeitung eines zu bearbeitenden Territoriums (S₁, S₂, S₃, S₄, S₅5), mit an verschiedenen der landwirtschaftlichen Maschinensysteme (1, 2, 2') angeordneten
- Positionsermittlungseinrichtungen (3, 3'), um eine aktuelle Position (P₁, P₂) der betreffenden Maschinensysteme (1, 2) zu ermitteln,
- Routenplanungsdaten-Ermittlungseinrichtungen (6, 6') und
- Kommunikationseinrichtungen (7, 7'), um Routenplanungsdaten (L₁, L₂, ...,L₁₉, Lᵥ, L_{V6}, L_{V7}, L_{V8}, L_{G}, SZ, SZ') zu versenden, und mit zumindest einer Routenplanungseinrichtung (5, 5'), welche zum Empfang von Routenplanungsdaten (L₁, L₂, ..., L₁₉, Lv, L_{V6}, L_{V7}, L_{V8}, L_{G}, SZ, SZ') mit einer Empfangseinheit (12,12') gekoppelt ist, um auf Basis von empfangenen Routenplanungsdaten (L₁, L₂, ...,L₁₉, Lᵥ, L_{V6}, L_{V7}, L_{V8}, L_{G}, SZ, SZ') einen gemeinsamen Routenplan für das betreffende Territorium (S₁, S₂, S₃, S₄, S₅) zu erstellen, wobei der gemeinsame Routenplan dynamisch änderbar ist, wenn ein neues Maschinensystem zur Gruppe (G) hinzukommt und innerhalb der Gruppe (G) angemeldet wird oder ein Maschinensystem die Gruppe (G) verlässt und von der Gruppe (G) abgemeldet wird.

## Claims

1. A method of creating a route plan for a group (G) of agricultural machine systems (1, 2, 2') for working a territory (S1, S2, S3, S4, S5) to be worked, in which
- the machine systems (1, 2, 2') respectively have route planning data determining devices (6, 6') and are in data exchange relationship with each other,
- on the basis of exchanged route planning data (L₁, L₂, ..., L₁₉, Lᵥ, L_{V6}, LV7, L_{V8}, L_{G}, SZ, SZ') a common route plan for the territory (S₁, S₂, S₃, S₄, S₅) in question is produced,
wherein the common route plan is dynamically altered if a new machine system is added to the group (G) and is logged in within the group (G) or a machine system leaves the group (G) and is logged out of the group (G).

2. A method according to claim 1 **characterised in that** the route planning data (L₁, L₂, ..., L₁₉, Lᵥ, L_{V6}, LV7, L_{V8}, L_{G}, SZ, SZ') include geographical reference data (L₁, L₂, ..., L₁₉) which are determined by means of the machine systems (1, 2, 2').

3. A method according to claim 1 or claim 2 **characterised in that** the territory) to be worked is subdivided on the basis of the route planning data (L₁, L₂, ..., L₁₄) into sub-areas (B₁, B₂, B₈).

4. A method according to claim 3 **characterised in that** a partial route plan for a given partial area (B₄, B₅, B₆, B₇, B₈) of the territory (S₂, S₃) to be worked is determined by each machine system.

5. A method according to one of claims 1 to 4 **characterised in that** the machine systems work the territory (S₅) in chronological succession.

6. A method according to one of claims 1 to 4 **characterised in that** the machine systems (1, 2, 2') work a territory (S₂, S₃) in parallel relationship at least at times.

7. A method according to one of claims 1 to 6 **characterised in that** current position data of the individual machine systems (1, 2, 2') are repeatedly determined, which data are sent to the respective other machine systems (1, 2, 2').

8. A method according to one of claims 1 to 7 **characterised in that** a map created on the basis of the geographical reference data, the current position (P₁) and the optimum route of the machine system (1) in question as well as the current positions (P₂) of other machine systems (2) of the group (G), that are on the territory to be worked, are respectively outputted for the operators of the machine systems (1, 2) by means of a display device (9).

9. A method according to claim 8 **characterised in that** the routes of respective other machine systems of the group, that are on the territory to be worked, are displayed to the operator of a machine system (1, 2).

10. A method of controlling a group (G) of agricultural machine systems (1, 2, 2') in the working of a territory (S₁, S₂, S₃, S₄, S₅) to be worked in which in accordance with one of claims 1 to 9 a common route plan is created, which includes optimised routes (R₁, R₂, R₃, R₄, R₅) associated with the individual machine systems (1, 2), for working of the territory (S₁, S₂, S₃, S₄, S₅) and the machine systems (1, 2, 2') are driven along the route (R₁, R₂, R₃, R₄, R₅) respectively associated with them.

11. A route planning system for creating a route plan for a group (G) of agricultural machine systems (1, 2, 2') for working a territory (S₁, S₂, S₃, S₄, S₅) to be worked, comprising, arranged on various ones of the agricultural machine systems (1, 2, 2'),
- position determining devices (3, 3') to determine a current position (P₁, P₂) of the machine systems (1, 2) in question,
- route planning data determining devices (6, 6'), and
- communication devices (7, 7') to send route planning data (L₁, L₂, ..., L₁₉, Lᵥ, L_{V6}, L_{V7}, L_{V8}, L_{G}, SZ, SZ') and with at least one route planning device (5, 5') which is coupled to a receiving unit (12, 12') for receiving route planning data (L₁, L₂, ..., L₁₉, Lᵥ, L_{V6}, L_{V7}, L_{V8}, L_{G}, SZ, SZ'), in order on the basis of received route planning data (L₁, L₂, ..., L₁₉, Lᵥ, L_{V6}, L_{V7}, L_{V8}, L_{G}, SZ, SZ') to create a common route plan for the territory (S₁, S₂, S₃, S₄, S₅) in question, wherein the common route plan can be dynamically changed when a new machine system is added to the group (G) and is logged on within the group (G) or a machine system leaves the group (G) and is loggged out of the group (G).

## Revendications

1. Procédé d'élaboration d'un plan d'itinéraires pour un groupe (G) de systèmes de machines agricoles (1, 2, 2') pour le travail d'un territoire à travailler (S₁, S₂, S₃, S₄, S₅), dans lequel
- les systèmes de machines (1, 2, 2') présentent chacun des dispositifs de détermination de données de planification d'itinéraires (6, 6') et échangent des données entre eux,
- un plan d'itinéraires commun pour le territoire concerné (S₁, S₂, S₃, S₄, S₅) est élaboré sur la base des données de planification d'itinéraires (L₁, L₂, ..., L₁₉, Lᵥ, L_{V6}, L_{V7}, L_{V8}, L_{G}, SZ, SZ') échangées,
le plan d'itinéraires commun étant modifié dynamiquement quand un nouveau système de machines s'ajoute au groupe (G) et est inscrit dans le groupe (G) ou quand un système de machines quitte le groupe (G) et est désinscrit du groupe (G).

2. Procédé selon la revendication 1, **caractérisé en ce que** les données de planification d'itinéraires (L₁, L₂, ..., L₁₉, Lᵥ, L_{V6}, L_{V7}, L_{V8}, L_{G}, SZ, SZ') comprennent des données géographiques de référence (L₁, L₂, ..., L₁₉) qui sont déterminées à l'aide des systèmes de machines (1, 2, 2').

3. Procédé selon la revendication 1 ou 2, **caractérisé en ce que** le territoire à travailler (S₁, S₂, S₃) est divisé en zones partielles (B₁, B₂, B₈) sur la base des données de planification d'itinéraires (L₁, L₂, ..., L₁₄).

4. Procédé selon la revendication 3, **caractérisé en ce que** chaque système de machines détermine un plan d'itinéraires partiel pour une zone partielle (B₄, B₅, B₆, B₇, B₈) définie du territoire à travailler (S₂, S₃).

5. Procédé selon une des revendications 1 à 4, **caractérisé en ce que** les systèmes de machines travaillent le territoire (S₅) successivement dans le temps.

6. Procédé selon une des revendications 1 à 4, **caractérisé en ce que** les systèmes de machines (1, 2, 2') travaillent un territoire (S₂, S₃) au moins temporairement en parallèle.

7. Procédé selon une des revendications 1 à 6, **caractérisé en ce que** des données de position courante des différents systèmes de machines (1, 2, 2') sont déterminées de manière répétée et transmises aux autres systèmes de machines (1, 2, 2') respectifs.

8. Procédé selon une des revendications 1 à 7, **caractérisé en ce qu'**une carte élaborée sur la base des données géographiques de référence, la position courante (P₁) et l'itinéraire optimal du système de machines (1) concerné ainsi que les positions courantes (P2) d'autres systèmes de machines (2) du groupe (G) se trouvant sur le territoire à travailler sont présentés à chaque opérateur des systèmes de machines (1, 2) au moyen d'un dispositif d'affichage (9).

9. Procédé selon la revendication 8, **caractérisé en ce que** les itinéraires des autres systèmes de machines du groupe se trouvant sur le territoire à travailler sont affichés à l'attention de l'opérateur d'un système de machines (1, 2).

10. Procédé de commande d'un groupe (G) de systèmes de machines agricoles (1, 2, 2') pour le travail d'un territoire à travailler (S₁, S₂, S₃, S₄, S₅), dans lequel, selon une des revendications 1 à 9, un plan d'itinéraires commun est élaboré, lequel contient des itinéraires optimisés (R₁, R₂, R₃, R₄, R₅) associés aux différents systèmes de machines (1, 2) pour travailler le territoire (S₁, S₂, S₃, S₄, S₅), et les systèmes de machines (1, 2, 2') sont conduits le long de l'itinéraire (R₁, R₂, R₃, R₄, R₅) qui leur a été respectivement associé.

11. Système de planification d'itinéraires pour élaborer un plan d'itinéraires pour un groupe (G) de systèmes de machines agricoles (1, 2, 2') pour le travail d'un territoire à travailler (S₁, S₂, S₃, S₄, S₅), avec, disposés sur les différents systèmes de machines agricoles (1, 2, 2'),
- des dispositifs de détermination de position (3, 3') pour déterminer une position courante (P₁, P₂) des systèmes de machines (1, 2) concernés,
- des dispositifs de détermination de données de planification d'itinéraires (6, 6') et
- des dispositifs de communication (7, 7') pour transmettre les données de planification d'itinéraires (L₁, L₂, ..., L₁₉, Lᵥ, L_{V6}, L_{V7}, L_{V8}, L_{G}, SZ, SZ'), et avec au moins un dispositif de planification d'itinéraires (5, 5'), lequel est couplé à une unité de réception (12, 12') pour recevoir des données de planification d'itinéraires (L₁, L₂, ..., L₁₉, Lᵥ, L_{V6}, L_{V7}, L_{V8}, L_{G}, SZ, SZ'), pour élaborer un plan d'itinéraires commun pour le territoire (S₁, S₂, S₃, S₄, S₅) concerné sur la base des données de planification d'itinéraires (L₁, L₂, ..., L₁₉, Lᵥ, L_{V6}, L_{V7}, L_{V8}, L_{G}, SZ, SZ') reçues, le plan d'itinéraires commun étant modifiable dynamiquement quand un nouveau système de machines s'ajoute au groupe (G) et est inscrit dans le groupe (G) ou quand un système de machines quitte le groupe (G) et est désinscrit du groupe (G).
